# EUROPÄISCHE PATENTANMELDUNG

(11) **EP 1 837 235 A1**
(43) Veröffentlichungstag der Anmeldung: **26.09.2007**
(21) Anmeldenummer: 07002579.6
(22) Anmeldetag: 07.02.2007
(51) Int. Cl.: B60Q 1/30, B60P 1/44

(54) **Hubladebühne für Fahrzeuge und Lichtsignaleinrichtung für insbesondere einer solchen Hubladebühne**

(30) Priorität: 21.03.2006 DE 202006004612 U
(71) Anmelder: MBB Liftsystems AG, 27777 Ganderkesee (DE)
(72) Erfinder: Krüger, Fritz Wilhelm, 65760 Eschborn (DE)
(74) Vertreter: Möller, Friedrich

(57) **Zusammenfassung**

Ladeplattformen (12) von Hubladebühnen (10) müssen beleuchtet sein, damit sie insbesondere bei Dunkelheit erkennbar sind. Bekannt ist es, Ladeplattformen (12) durch Lichtsignaleinrichtungen (16) auf der Nutzfläche (19) und/oder an seitlichen sowie quergerichteten Randflächen (20, 21) zu beleuchten. Die Lichtsignaleinrichtungen (16) auf der Nutzfläche (19) sind störend und können leicht beschädigt werden. Die Lichtsignaleinrichtungen (16) in seitlichen und quergerichteten Randflächen (20, 21) bekannter Ladeplattformen (12) beleuchten nicht in ausreichendem Maße die eine besondere Gefährdung darstellenden Ecken.

Die Erfindung schlägt eine Hubladebühne (10) vor, bei der die Ladeplattform (12) in Eckbereichen (17, 18) zwischen seitlichen und quergerichteten Randflächen (20, 21) Ausnehmungen (22) aufweist, die durch Gehäuse der Lichtsignaleinrichtungen (16) bildende Randkörper (23) ausgefüllt sind. Dadurch werden nicht nur die seitlichen und quergerichteten Randflächen (20, 21), sondern auch die Eckbereiche (17, 18) der erfindungsgemäße Ladeplattform (12) ausreichend beleuchtet und dadurch vor allem bei Dunkelheit gut sichtbar.

## Beschreibung

Die Erfindung betrifft eine Hubladebühne gemäß dem Oberbegriff des Anspruchs 1.

Hubladebühnen dienen dazu, das Be- und Entladen von Fahrzeugen mit insbesondere schweren Gegenständen zu erleichtern. Dazu verfügen die Hubladebühnen über eine vorzugsweise an der Rückseite eines Fahrzeugaufbaus durch ein Hubwerk heb- und senkbar sowie schwenkbar angelenkte Ladeplattform.

Im heruntergeschwenkten Zustand steht die Ladeplattform nach hinten gegenüber dem Fahrzeug vor. Dabei ragt die Ladeplattform in den Verkehrsraum, wodurch sie ein Hindernis darstellt. Um insbesondere bei Dunkelheit dieses Hindernis kenntlich zu machen, ist es Vorschrift, die Ladeplattform mit Lichtsignaleinrichtungen zu versehen. Bekannte Lichtsignaleinrichtungen sind auf der Lasten aufnehmenden oberen Nutzfläche der Ladeplattform angeordnet. Ein Gehäuse der jeweiligen Lichtsignaleinrichtung bildet dabei eine Erhöhung auf der Nutzfläche. Diese Erhöhung stellt ein Hindernis dar, das beispielsweise von Gabelhubwagen nicht überfahren werden kann. Außerdem bildet das gegenüber der Nutzfläche nach oben vorstehende Gehäuse der jeweiligen Lichtsignaleinrichtung eine Stolpergefahr für auf der Nutzfläche der Ladeplattform sich befindenden Personen.

Aus der DE 20 2005 015 591 U1 ist eine Ladebordwand mit in der Ladeplattform integrierter Beleuchtung bekannt. Die Beleuchtung ist durch Lichtblöcke in den seitlichen Randflächen und der quergerichteten Randfläche der Ladeplattform gebildet. Die Lichtblöcke sind mit Abstand von den Ecken zwischen den seitlichen Randflächen und der quergerichteten Randfläche angeordnet. Dadurch sind insbesondere bei Dunkelheit die besondere Gefährdungen darstellenden freien Ecken der Ladeplattform nicht erkennbar.

Der Erfindung liegt die Aufgabe zugrunde, eine Hubladebühne zu schaffen, die auf einfache Weise zur Erhöhung der Sicherheit beiträgt.

Eine Hubladebühne zur Lösung dieser Aufgabe weist die Merkmale des Anspruchs 1 auf. Durch die Zuordnung mindestens einer Lichtsignaleinrichtung zu wenigstens einem äußeren Eckbereich der Ladeplattform gibt die Lichtsignaleinrichtung Lichtsignale im hinteren Eckbereich der Ladeplattform ab, und zwar aus der an den mindestens einen Eckbereich angrenzenden seitlichen Randfläche und der hinteren quergerichteten Randfläche. Es kann so auf einfache Weise eine Lichtsignaleinrichtung dazu dienen, an der Seite und nach hinten im jeweiligen Eckbereich Lichtsignale abzugeben. Bei gegenüberliegenden hinteren Eckbereichen der Ladeplattform zugeordneten Lichtsignaleinrichtungen geben diese vor allem bei Dunkelheit deutlich sichtbare Warnsignale ab. Außerdem werden durch die Zuordnung der Lichtsignaleinrichtungen zu den Eckbereichen der seitlichen quergerichteten Randflächen der Ladeplattform senkrecht aus den Randflächen austretende Lichtstrahlen erzeugt, die vorzugsweise parallel zur Nutzfläche der Ladeplattform gerichtet sind. Dadurch sind die äußersten Stellen der Ladeplattform durch optische Signale markant gesichert.

Dadurch, dass Eckbereiche der Ladeplattform Ausnehmungen aufweisen, denen Randkörper zugeordnet sind, bilden die Randkörper einerseits ein Gehäuse für jede Signaleinrichtung, während sie andererseits dazu dienen, von den Ecken ausgehende Teile der seitlichen Randflächen und der quergerichteten Randfläche der Ladeplattform zu bilden. Dadurch lassen sich die Lichtsignaleinrichtungen unter Bildung von Teilen der Eckbereiche der Ladeplattform in dieselbe integrieren. Der jeweilige Randkörper bildet dabei Teile von Randflächen der Ladeplattform und schließt vorzugsweise etwa bündig mit einem jeweiligen Eckbereich der Ladeplattform, mindestens der oberen Nutzfläche der Ladeplattform, ab. Auf diese Weise bildet das Gehäuse der Lichtsignaleinrichtung jeweils einen Eckbereich der Ladeplattform, wobei der Randkörper in die Umrisslinien der Ladeplattform integriert ist, d. h. gegenüber diesen Umrisslinien vor allem nach oben nicht vorsteht und damit das Befahren und Begehen der Nutzfläche der Ladeplattform nicht behindert.

Es ist des Weiteren vorgesehen, die Randkörper lösbar mit den Eckbereichen der Ladeplattform zu verbinden, beispielsweise durch Aufstecken und/oder Anschrauben. Dadurch können eventuell beschädigte Randkörper leicht ausgetauscht werden und ebenso leicht defekte Leuchtmittel der Leuchtsignaleinrichtungen erneuert werden.

Gemäß einer Weiterbildung der Erfindung ist die oder jede Leuchtsignaleinrichtung zur Lichtabstrahlung in unterschiedliche Richtungen ausgebildet. Vorzugsweise dient jede Lichtsignaleinrichtung zur Lichtabstrahlung senkrecht zu einer seitlichen Randfläche und senkrecht zu einer quergerichteten Randfläche, so dass von der Leuchtsignaleinrichtung Lichtstrahlen ausgehen, die in einer parallel zur Nutzfläche liegenden Ebene sich befinden, aber bevorzugt in dieser Ebene unter einem Winkel von 90° in abweichenden Richtungen verlaufen. Dadurch ist es möglich, von vorzugsweise zwei den Ecken der Ladeplattform zugeordneten Leuchtsignaleinrichtungen alle vorzugsweise senkrecht zur Nutzfläche verlaufenden Randflächen zu beleuchten.

Der jeweilige das Gehäuse der Lichtsignaleinrichtung bildende Randköper ist bevorzugt aus einem elektrischen nicht leitenden Material gebildet. Insbesondere ist der Randkörper einstückig aus Kunststoff gebildet, wobei es sich um einen Thermoplast oder einen Duoplast handeln kann. Der Kunststoff kann auch mit Glasfaserverstärkungen versehen sein.

Im Randkörper sind bevorzugt mehrere Lichtaustrittsöffnungen gebildet und zwar mindestens eine Lichtaustrittsöffnung in jeder der einen Teil der Randflächen der Ladeplattform bildenden äußeren Randfläche des Randkörpers. Bei einem bevorzugten Ausführungsbeispiel der Erfindung sind die Lichtaustrittsöffnungen durch lichtdurchlässige Abdeckungen verschlossen, so dass von außen kein Schmutz durch die Lichtaustrittsöffnungen ins Innere des Randkörpers gelangen kann. Vor allem wenn das Leuchtmittel aus mindestens einer LED, LCD oder dergleichen gebildet ist, ist bevorzugt die lichtdurchlässige Abdeckung der jeweiligen Lichtaustrittsöffnung linsenartig ausgebildet.

Es ist weiterhin vorgesehen, im jeweiligen Randkörper mindestens einen Hohlraum anzuordnen, in dem vor allem das oder jedes Leuchtmittel, Kühlkörper, elektrische Schaltungen und/oder Steuerungen untergebracht sind. Die Schaltungen, Steuerungen und/oder Kühlkörper sind gemäß einem weiteren Vorschlag der Erfindung durch eine Füllmasse im Randkörper fixiert. Die Füllmasse kann gleichzeitig dazu dienen, insbesondere die Schaltung und/oder Steuerung im Inneren des Randkörpers, nämlich im mindestens einen Hohlkörper, worin sie untergebracht sind, gegen äußere Einflüsse, insbesondere Feuchtigkeit, zu schützen. Auch die Fassung des jeweiligen Leuchtmittels kann gegebenenfalls durch die Füllmasse im Randkörper fixiert sein.

Nachfolgend wird ein bevorzugtes Ausführungsbeispiel der Erfindung anhand der Zeichnung näher erläutert. In der Zeichnung zeigen:
- Fig. 1: eine Seitenansicht eines hinteren Teilbereichs eines Fahrzeugs mit einer daran angeordneten Hubladebühne,
- Fig. 2: eine perspektivische Ansicht einer Ladeplattform der Hubladebühne,

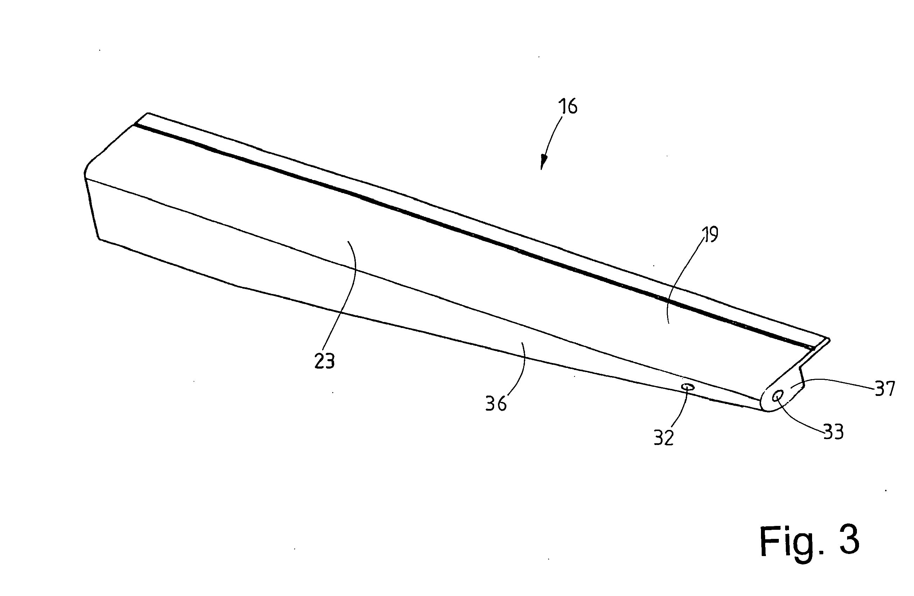

- Fig. 3: eine perspektivische Ansicht eines Randkörpers der Ladeplattform und/oder der Lichtsignaleinrichtung,
- Fig. 4: eine teilweise geschnittene Seitenansicht eines Endbereichs des Randkörpers,
- Fig. 5: eine teilweise geschnittene Draufsicht auf den Randkörper, und
- Fig. 6: einen vergrößert dargestellten Schnitt VI-VI durch den Randkörper der Fig. 4.

Die in den Figuren gezeigte Hubladebühne 10 ist an der Rückseite eines teilweise dargestellten Fahrzeugs 11 angeordnet. Die Hubladebühne 10 verfügt über eine Ladeplattform 12 und eine Hubeinrichtung 13. Die Hubeinrichtung 13 verbindet die Ladeplattform 12 mit dem Chassis des Fahrzeugs 11. Des Weiteren dient die Hubeinrichtung 13 dazu, die Ladeplattform 12 anzuheben, abzusenken und um eine horizontale, quer zur Längsachse des Fahrzeugs 11 gerichtete Schwenkachse 14 zwischen einer Rückseite 15 der Ladeplattform 12 und der Hubeinrichtung 13 zu verschwenken. Zu diesem Zweck weist die Hubeinrichtung 13 vorzugsweise als Hydraulikzylinder ausgebildete Hub- und Schwenkorgane auf.

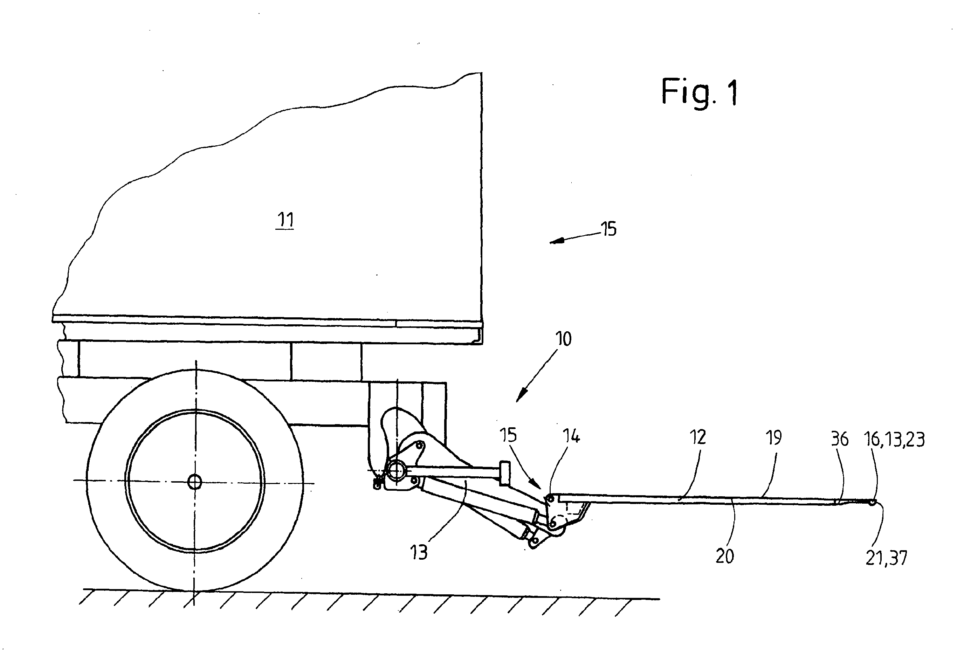

Die Fig. 1 zeigt die Ladeplattform 12 in einer teilweise abgesenkten und eine etwa horizontale Beladestellung geschwenkten Position. Dabei ragt die Ladeplattform 12 in den Verkehrsraum hinter dem Fahrzeug 11 hinein. Um insbesondere bei Dunkelheit die hinter dem Fahrzeug 11 vorstehende Ladeplattform 12 sichtbar zu machen, verfügt die Ladeplattform über Lichtsignaleinrichtungen 16. Im gezeigten Ausführungsbeispiel sind zwei gegenüberliegende, hintere Eckbereiche 17 und 18 der Ladeplattform 12 jeweils mit einer gleich ausgebildeten jedoch spiegelverkehrt angeordneten Lichtsignaleinrichtung 16 versehen.

Die Ladeplattform 12 weist eine ebenflächige Oberseite auf, die als Nutzfläche 19 zur Aufnahme von Gegenständen, womit das Fahrzeug 11 beladen werden soll oder die aus dem Fahrzeug 11 zu entladen sind. An die Ränder der rechteckförmigen Nutzfläche 19 schließen sich etwa senkrecht zur Nutzfläche 19 verlaufende parallele seitliche Randflächen 20 und eine freie Enden der seitlichen Randflächen 20 verbindende quergerichtete Randfläche 21 an. Die schmale quergerichtete Randfläche 21 bildet auf diese Weise eine hintere Abschlussfläche der Ladeplattform 12. Die die hintere Abschlussfläche bildende quergerichtete Randfläche 21 verläuft quer zur Fahrtrichtung des Fahrzeugs 11, während die beiden parallelen, seitlichen Randflächen 20 in Längsrichtung des Fahrzeugs 11 verlaufen.

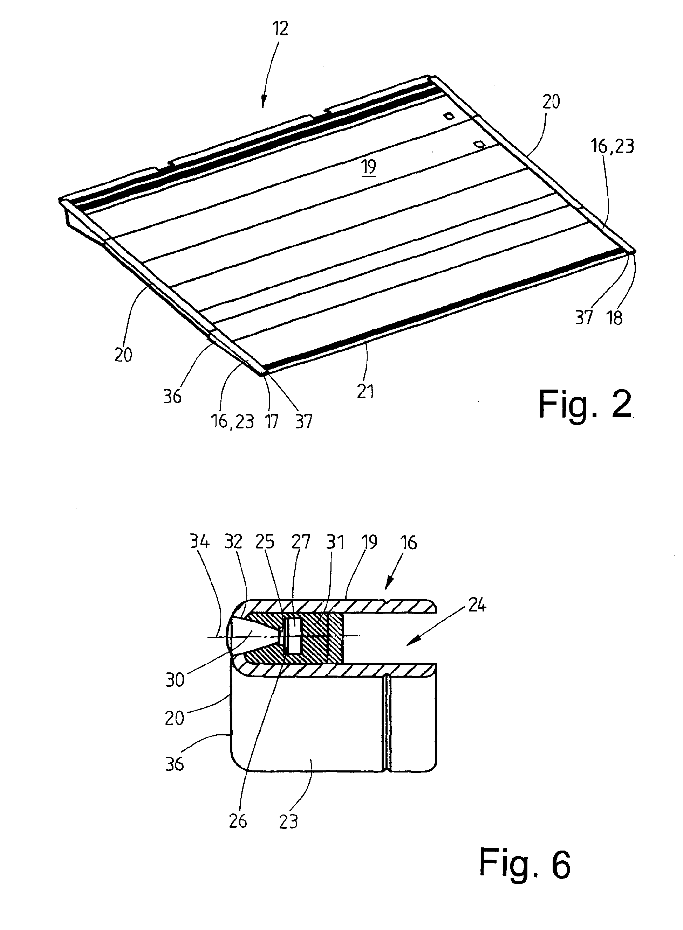

In von gegenüberliegenden Seiten der quergerichteten Randfläche 21 ausgehenden Eckbereichen 17 und 18 der Ladeplattform 12 sind längliche Ausnehmungen 22 vorgesehen, die sich über einen Teilbereich jeder seitlichen Randfläche 20 erstrecken, und zwar im gezeigten Ausführungsbeispiel über etwa ¼ der Länge der jeweiligen seitlichen Randfläche 20. Hierauf ist die Erfindung aber nicht beschränkt. In jeder dieser Ausnehmungen 22 an einem Eckbereich 17, 18 der Ladeplattform 12 ist eine der Lichtsignaleinrichtungen 16 lösbar angeordnet. Jede Lichtsignaleinrichtung 16 verfügt über ein Gehäuse, das als ein Randkörper 23 der Ladeplattform 12 ausgebildet ist. Jeder Randkörper 23 ist so ausgebildet, dass er die Ausnehmung 22, woran er lösbar befestigt ist, vorzugsweise festgeschraubt ist, etwa ausfüllt. Dabei bilden Außenseiten jedes Randkörpers 23 einen hinteren Teil einer seitlichen Randfläche 20, einen außenliegenden Teil der quergerichtete Randfläche 21 und einen Teil der Nutzfläche 19. Indem die Randkörper 23 an die jeweilige Ausnehmung 22 angepasst sind, schließen sie bündig mit der Nutzfläche 19, aber auch den seitlichen Randflächen 20 und der quergerichteten Randfläche 21 ab (Fig. 2). Die Randkörper 23 sind vorzugsweise aus einem elektrisch nicht leitfähigen Material gebildet. Dabei kann es sich um thermoplastischen oder duroplastischen Kunststoff handeln. Der Kunststoff kann faserverstärkt sein. Denkbar ist es aber auch, die Randkörper 23 wie die Ladeplattform 12 aus Aluminium oder Stahl zu bilden.

Die Randkörper 23 sind so ausgebildet, dass sie im Inneren mindestens einen Hohlraum 24 zur Aufnahme wenigstens eines Leuchtmittels aufweisen. Im gezeigten Ausführungsbeispiel sind zwei Leuchtmittel 25 in jedem Randkörper 23 angeordnet. Die Leuchtmittel 25 sind bevorzugt als LCD oder LED ausgebildet. Innerhalb des Hohlraums 24 des Randkörpers 23 befindet sich des Weiteren für jedes Leuchtmittel 25 eine Platine 26 mit einer elektrischen Schaltung 28, ein Kühlkörper 27, eine Steuerung und elektrische Kabel bzw. Anschlüsse. Bei einer bevorzugten Ausgestaltung der Lichtsignaleinrichtung 16 ist jedem Leuchtmittel 25 eine lichtdurchlässige Abdeckung zugeordnet. Bei der lichtdurchlässigen Abdeckung handelt es sich hier um eine lichtdurchlässige Linse 30, die das aus dem Leuchtmittel 25 austretende Licht entsprechend optisch moduliert. Im hier gezeigten Randkörper 23 sind mehrere Hohlräume 24 angeordnet. Diejenigen Hohlräume 24, in denen die Leuchtmittel 25, die Platinen 26, die Kühlkörper 27 und/oder die Schaltungen 28 angeordnet sind, sind mindestens teilweise mit einer Vergussmasse 31 versehen. Die Vergussmasse 31 dient dazu, die Platine 26 mit der elektrischen Schaltung 28, den Kühlkörper 27, die Steuerung und/oder elektrische Kabel bzw. Anschlüsse in den Hohlräumen 24 des jeweiligen Randkörpers 23 zu fixieren und gegen äußere Einflüsse, beispielsweise das Eindringen von Feuchtigkeit, abzudichten. Die Vergussmasse 31 kann auch die Fassungen der Leuchtmittel 25 im Hohlraum 24 des jeweiligen Randkörpers 23 fixieren.

Eine Linse 30 ist bevorzugt in jeder Lichtaustrittsöffnung 32, 33 des Randkörpers 23 eingesetzt. Dabei dient die Linse 30 gleichzeitig zum Verschluss der jeweiligen Lichtaustrittsöffnung 32, 33. Befestigt ist die Linse 30 in der Lichtaustrittsöffnung 32 bevorzugt durch Kleben, wodurch die Lichtaustrittsöffnung 32 des Randkörpers 23 dicht verschlossen wird. Es ist aber auch denkbar, die Linse 30 vom Inneren des Randkörpers 23 her in die Lichtaustrittsöffnung 32, 33 einzusetzen und hierin formschlüssig zu fixieren. Gehalten wird dann die Linse 30 in der Lichtaustrittsöffnung 32 durch die Vergussmasse 31 im betreffenden Hohlraum 24 im Inneren des Randkörpers 23.

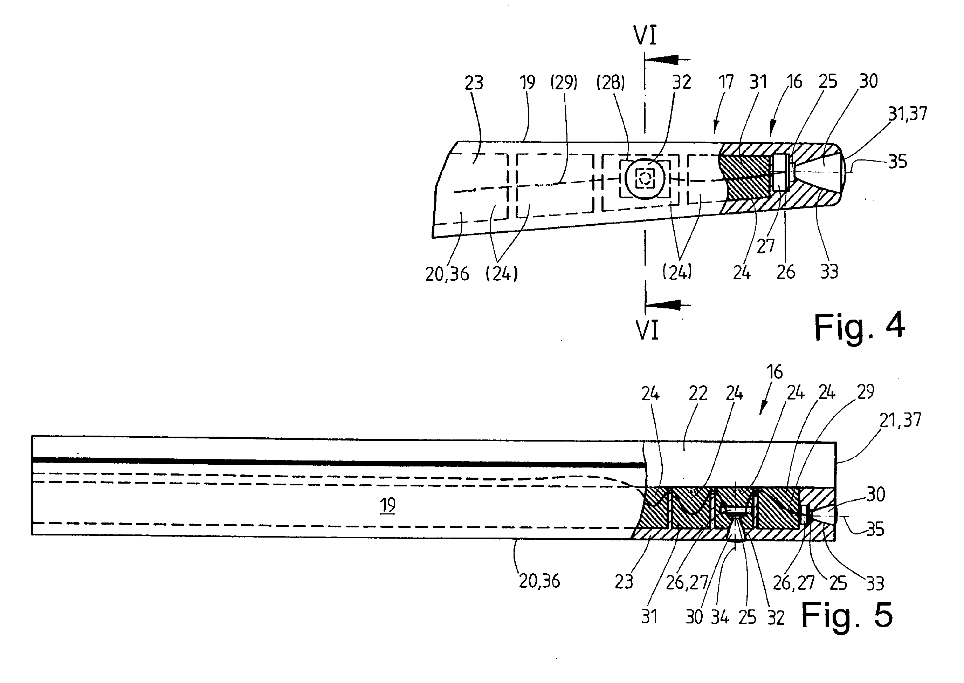

Die hier gezeigten Lichtsignaleinrichtungen 16 weisen jeweils zwei separate Leuchtmittel 25 auf, denen jeweils eine eigene Lichtaustrittsöffnung 32, 33 zugeordnet ist. Demzufolge verfügt der Randkörper 23 jeder Lichtsignaleinrichtung 16 über zwei Lichtaustrittsöffnungen 32 und 33. Die beiden Lichtaustrittsöffnung 32, 33 jedes Randkörpers 23 weisen in einer gleichen Ebene liegende Längsmittelachsen 34 und 35 auf. Diese Ebene verläuft parallel zur Nutzfläche 19, nämlich etwas unterhalb derselben. In der gemeinsamen Ebene sind die Längsmittelachsen 34 und 35 der Lichtaustrittsöffnungen 32, 33 unterschiedlich gerichtet, und zwar um 90° versetzt (Fig. 5). Die Längsmittelachse 34, der einer seitlichen Randfläche 20 zugeordneten Lichtaustrittsöffnung 32 verläuft senkrecht zur bündig mit der seitlichen Randfläche 20 der Ladeplattform 12 abschließenden Randfläche 36 des Randkörpers 23. Die Längsmittelachse 35 der einem Endbereich der quergerichteten Randfläche 21 zugeordneten Lichtaustrittsöffnung 33 in der bündig mit der quergerichteten Randfläche 21 der Ladeplattform 12 abschließenden Randfläche 37 des Randkörpers 23 verläuft ebenfalls senkrecht zu dieser Randfläche 37 (Fig. 5). Dadurch, dass die senkrecht zueinander gerichteten seitlichen Randflächen 36 und 37 des Randkörpers 23 jeweils eine Lichtaustrittsöffnung 32 und 33 aufweisen, erzeugt die Lichtsignaleinrichtung 16 einen aus der seitlichen Randfläche 20 und der quergerichteten Randfläche 21 austretenden Lichtstrahl oder Lichtkegel. So wird jeder Eckbereich 17 und 18 der Ladeplattform 12 von einer der beiden Lichtsignaleinrichtungen 16 seitlich und hinten beleuchtet. Die von den Eckbereichen 17 und 18 der Ladeplattform 12 gebildeten gegenüberliegenden freien Spitzen der Ladeplattform 12 sind somit durch unterschiedlich gerichtete Leuchtmittel 25 seitlich und hinten beleuchtbar.

Die beiden Leuchtmittel 25 der beiden Lichtsignaleinrichtungen 16 strahlen Licht an den Eckbereichen 17 und 18 der Ladeplattform 12 in unterschiedlichen Richtungen ab, und zwar zu gegenüberliegenden Seiten der Ladeplattform 12 und zum freien Ende der Ladeplattform 12. Die Spitzen in den Eckbereichen 17 und 18 der Ladeplattform 12 werden so in unterschiedlichen Richtungen beleuchtet, und zwar mit etwa horizontalen Lichtstrahlen oder Lichtkegeln, so dass die Spitzen der Ladeplattform 12 nicht nur hinter dem Fahrzeug 11 erkennbar sind, sondern auch von entgegengesetzten Seiten des Fahrzeugs 11 her.

Weil die erfindungsgemäß als Randkörper 23 ausgebildeten Gehäuse der Lichtsignaleinrichtungen 16 bündig mit den Eckbereichen 17 und 18 der Ladeplattform 12 abschließen, nämlich die Ausnehmungen 22 in den Eckbereichen 17 und 18 der Ladeplattform 12 bündig ausfüllen, bilden die erfindungsgemäßen Lichtsignaleinrichtungen 17 keine Erhöhungen auf der Nutzfläche 19 der Ladeplattform 12. Die Nutzfläche 19 der Ladeplattform 12 ist somit aufgrund der erfindungsgemäßen Lichtsignaleinrichtungen 16 vollständig befahrbar und begehbar. Aber auch gegenüber den Randflächen 20, 21 der Ladeplattform 12 stehen die Randflächen 36, 37 der Randkörper 23 nicht vor.

Die Erfindung ist nicht beschränkt auf zwei jedem Randkörper 23 zur Bildung eines Gehäuses einer Lichtsignaleinrichtung 16 zugeordnete Leuchtmittel 25. Vielmehr lässt sich die Erfindung auch realisieren mit Lichtsignaleinrichtungen 16, die nur ein einziges Leuchtmittel 25 aufweisen oder über mehr als zwei Leuchtmittel 25 verfügen. Im letztgenannten Fall können mehrere Leuchtmittel 25 Licht zur jeweiligen Seite und/oder die freie Hinterkante, d. h. die quergerichtete Randfläche 21, abstrahlen.

Wenn das mit dem Randkörper 23 bündig mit dem jeweiligen Eckbereich 17 bzw. 18 der Ladeplattform 12 abschließende Gehäuse der Lichtsignaleinrichtung 16 jeweils nur ein einziges Leuchtmittel 25 aufweist, strahlt dieses bevorzugt Licht aus der quergerichteten Randfläche 21 nach hinten ab. Es ist aber auch denkbar, die Lichtsignaleinrichtung 16 mit einem Leuchtmittel 25 zu versehen, das einen Lichtstrahl oder einen Lichtkegel über 45° (von oben auf die Nutzfläche 19 gesehen) gegenüber der seitlichen Randfläche 20 und der quergerichteten Randfläche 21 abstrahlt, so dass das vom einzigen Leuchtmittel 25 der Lichtsignaleinrichtung 16 ausgestrahlte Licht sowohl von der Seite als auch von hinten sichtbar ist.

Entscheidend für die verschiedensten Ausgestaltungen der Lichtsignaleinrichtung 16 mit beliebiger Anzahl und Lichtausstrahlrichtung der Leuchtmittel 25 ist, dass der Lichtaustritt aus der Lichtsignaleinrichtung 16 durch solche Randflächen 36 und 37 des jeweiligen Randkörpers 23 zur Bildung des Gehäuses der Lichtsignaleinrichtung 16 erfolgt, die Teile der seitlichen Randflächen 20 und der diese verbindenden hinteren quergerichteten Randfläche 21 der Ladeplattform 12 bilden und dadurch die Nutzfläche 19 der Ladeplattform 12 nicht durch vorstehende Teile beeinträchtigen.

## Patentansprüche

1. Hubladebühne für Fahrzeuge mit einer heb-, senk- und verschwenkbaren Ladeplattform (12), die eine Lasten aufnehmende Nutzfläche (19) aufweist und mit mindestens einer der Ladeplattform (12) zugeordneten Lichtsignaleinrichtung (16), die zum Lichtaustritt aus die Nutzfläche (19) begrenzenden seitlichen Randflächen (20) und einer quergerichteten Randfläche (21) der Ladeplattform (12) ausgebildet ist, **dadurch gekennzeichnet, dass** Eckbereichen (17, 18) zwischen der quergerichteten Randfläche (21) und der hieran jeweils angrenzenden seitlichen Randfläche (20) der Ladeplattform (12) mindestens eine Lichtsignaleinrichtung (16) zugeordnet ist, dass die Eckbereiche (17, 18) der Ladeplattform (12) Ausnehmungen (22) aufweisen, den Ausnehmungen (22) Randkörper (23) zugeordnet sind, die die Ausnehmungen (22) in den Eckbereichen (17, 18) der Ladeplattform (12) ausfüllen, und dass der jeweilige Randkörper (23) ein Gehäuse der Lichtsignaleinrichtung (16) bildet.

2. Hubladebühne nach Anspruch 1, **dadurch gekennzeichnet, dass** der oder jeder vorzugsweise lösbar mit der jeweiligen Ausnehmung (22) verbundene Randkörper (23) Teile mindestens einer seitlichen Randfläche (20) und der quergerichteten Randfläche (21) der Ladeplattform (12) bildet, vorzugsweise in wenigstens einem Eckbereich (17, 18) der Ladeplattform (12), und/oder etwa bündig mit der Nutzfläche (19) der Ladeplattform (12) abschließt.

3. Hubladebühne nach Anspruch 1 oder 2, **dadurch gekennzeichnet, dass** jeder Randkörper (23) mindestens einen Hohlraum (24) zur Aufnahme wenigstens eines Leuchtmittels (25) der Leuchtsignaleinrichtung (16) aufweist.

4. Hubladebühne nach einem der vorhergehenden Ansprüche, **dadurch gekennzeichnet, dass** die oder jede Lichtsignaleinrichtung (16) zur Lichtabstrahlung in unterschiedlichen Richtungen ausgebildet ist, vorzugsweise in Richtung senkrecht zu einer jeweiligen seitlichen Randfläche (20) und senkrecht zur quergerichteten Randfläche (21).

5. Hubladebühne nach einem der vorhergehenden Ansprüche, **dadurch gekennzeichnet, dass** der jeweilige Randkörper (23) vorzugsweise mehrere Lichtaustrittsöffnungen (32, 33) aufweist, wobei die Lichtaustrittsöffnungen (23, 33) vorzugsweise unterschiedlich gerichtet sind, sich insbesondere in verschiedenen Randflächen (36, 37) des Randkörpers (23) befinden.

6. Hubladebühne nach Anspruch 5, **dadurch gekennzeichnet, dass** mindestens eine Lichtaustrittsöffnung (32, 33) in einer einen Teil einer seitlichen Randfläche (20) bildenden Randfläche (36) des Randkörpers (23) und mindestens eine weitere Lichtaustrittsöffnung (32, 33) in einer einen Teil der quergerichteten Fläche (21) bildenden Randfläche (37) des Randkörpers (23) angeordnet ist, wobei vorzugsweise den Lichtaustrittsöffnungen (32, 33) eine lichtdurchlässige Abdeckung, insbesondere eine linsenartige Abdeckung, zugeordnet ist.

7. Hubladebühne nach Anspruch 6, **dadurch gekennzeichnet, dass** jeder lichtdurchlässigen Abdeckung mindestens ein Leuchtmittel (25) zugeordnet ist.

8. Hubladebühne nach einem der vorhergehenden Ansprüche, **dadurch gekennzeichnet, dass** im jeweiligen Randkörper (23) eine vorzugsweise elektrische Schaltung (28) und/oder eine Steuerung angeordnet ist, vorzugsweise in einem Hohlraum (24) des Randkörpers (23) und/oder jedem Leuchtmittel (25) ein im Randköper (23) angeordneter Kühlkörper (27) zugeordnet ist.

9. Hubladebühne nach Anspruch 7, **dadurch gekennzeichnet, dass** die Kühlkörper (27), die Schaltungen (28) und/oder Steuerungen in dem oder jedem Hohlraum (24) des Randkörpers (23) durch vorzugsweise eine Vergussmasse (31) fixiert sind.

10. Hubladebühne nach einem der vorhergehenden Ansprüche, **dadurch gekennzeichnet, dass** der oder jeder Randkörper (23) aus einem elektrisch nicht leitenden Material, vorzugsweise Kunststoff, gebildet ist.
